# EUROPÄISCHE PATENTSCHRIFT

(11) **EP 1 182 423 B1**
(45) Veröffentlichungstag und Bekanntmachung des Hinweises auf die Patenterteilung: **07.01.2004**
(21) Anmeldenummer: 00118342.5
(22) Anmeldetag: 24.08.2000
(51) Int. Cl.: G01B 7/06

(54) **Sensor zur kapazitiven Messung von Foliendicken**
Sensor for measuring capacitively the tickness of sheets
Palpeur pour mesurer capacitevement l'épaisseur de feuilles

(43) Veröffentlichungstag der Anmeldung: 27.02.2002
(73) Patentinhaber: Plast-Control Gerätebau GmbH, 42899 Remscheid (DE)
(72) Erfinder: Stein, Markus, 58285 Gevelsberg (DE); Konermann, Stefan, 42897 Remscheid (DE)
(74) Vertreter: TER MEER STEINMEISTER & PARTNER GbR

(56) Entgegenhaltungen:
- EP-A- 0 097 570
- WO-A-88/09912
- DE-A- 3 335 766
- GB-A- 2 038 483
- US-A- 3 716 782
- US-A- 3 764 899
- US-A- 4 345 203
- US-A- 4 968 947
- PATENT ABSTRACTS OF JAPAN vol. 012, no. 199 (P-714), 9. Juni 1988 (1988-06-09) & JP 63 003202 A (KOKUSAI GIJUTSU KAIHATSU KK), 8. Januar 1988 (1988-01-08)

## Beschreibung

Die Erfindung betrifft einen Sensor zur kapazitiven Messung von Foliendicken, mit einer an der Folie abrollenden Trommel, die mindestens einen Meßkondensator aufweist, dessen Platten so in der Umfangsfläche der Trommel angeordnet sind, daß seine Kapazität von der Foliendicke beeinflußt wird, und mit einem Übertrager zur Übertragung des Meßsignals von der rotierenden Trommel auf ein stationäres Teil.

Solche Sensoren werden insbesondere zur Messung der Dicke von Blasfolien eingesetzt. Die Trommel ist dann so am Umfang des aus einem Extrusionswerkzeug extrudierten und mit Blasluft aufgeblasenen Folienschlauches angeordnet, daß sie an dem nach oben abgezogenen Folienschlauch abrollt. Der Vorteil gegenüber einem stationären Sensor besteht darin, daß zwischen dem Meßkopf und der Folie keine Reibung auftritt und somit ein Verkratzen der Folie vermieden wird. Wenn der Sensor zudem um die vertikale Achse des Folienschlauches drehbar ist, läßt sich während eines vollständigen Umlaufs des Sensors das Dikkenprofil auf dem gesamten Umfang der Folienblase aufnehmen. Das so gemessene Dickenprofil kann dann beispielsweise dazu benutzt werden, die Foliendikke mit Hilfe eines segmentweise steuerbaren Kühlrings in einem geschlossenen Regelkreis zu regeln, wie beispielsweise in EP-A-0 478 641 beschrieben wird.

Allerdings ist die räumliche Auflösung der Dickenmessung dadurch begrenzt, daß mit jedem Meßkondensator nur ein Meßwert je Trommelumdrehung aufgenommen werden kann, da die Messung nur dann vorgenommen werden kann, wenn der Meßkondensator mit der Folie in Berührung ist. Um eine hohe Auflösung zu erzielen, sollte deshalb der Umfang der Trommel möglichst klein sein. Andererseits wird jedoch der Trommelumfang nach unten dadurch begrenzt, daß der Meßkondensator eine gewisse Mindestgröße haben muß, damit überhaupt ein hinreichend genaues Meßsignal erhalten wird.

Aus US-A-5 223 797 ist ein Sensor der eingangs genannten Art bekannt, dessen Trommel zwei einander diametral gegenüberliegende Meßkondensatoren aufweist. Die Kondensatorplatten und die zwischen ihnen gebildeten Kondensatorspalte sind rechtwinklig zur Trommelachse orientiert. Die Trommel ist mit ihren entgegengesetzten Enden drehbar in einer Gabel gelagert, und der Übertrager zur Auskopplung des Meßsignals wird durch zwei Schleifkontakt-Einheiten gebildet, die an den entgegengesetzten Enden der Trommel angeordnet und auf die Achse der Trommel zentriert sind. Eine dieser Schleifkontakt-Einheiten ist mit den jeweiligen positiven Platten der Meßkondensatoren verbunden, und die andere Schleifkontakt-Einheit ist mit den negativen oder Masse-Platten der Meßkondensatoren verbunden. Wenn sich ein Meßkondensator an der Folie vorbei bewegt, dringt das zwischen den Kondensatorplatten gebildete elektrische Randfeld in das Folienmaterial ein, so daß die Folie als Dielektrikum wirkt und somit die Kapazität des Meßkondensators durch die Dicke der Folie beeinflußt wird. Mit Hilfe des durch die Schleifkontakt-Einheiten gebildeten Übertragers wird die von der Kapazität des Meßkondensators abhängige Spannung auf die Gabel und von dort weiter an eine stationäre Auswerteschaltung übertragen. Die Gabel kann ihrerseits drehbar gelagert sein, so daß die Trommel relativ zur Folie auf einer schraubenförmigen Bahn abrollen kann, während die Meßvorrichtung um den Folienschlauch umläuft.

Ein Problem besteht bei dieser bekannten Meßvorrichtung jedoch darin, daß die effektive Kapazität der Meßkondensatoren und damit auch die als Meßsignal dienende Spannung leicht durch externe Einflüsse, beispielsweise durch elektrische Streufelder oder durch Änderungen der Geometrie elektrisch leitender Teile in der Umgebung der leitenden Verbindungen zwischen den Meßkondensatoren und der Auswerteschaltung verfälscht werden kann. Auch durch Abschirmungsmaßnahmen lassen sich diese Störeffekte nur unzureichend unterdrücken.

Grundsätzlich ist es bei kapazitiven Meßsystemen bekannt, mit Hilfe des Meßkondensators einen Schwingkreis aufzubauen und die von der Kapazität des Meßkondensators abhängige Eigenfrequenz des Schwingkreises als Meßsignal auszuwerten. In diesem Fall besteht jedoch das Problem, daß auch die Eigenfrequenz des Schwingkreises leicht durch äußere Einflüsse verfälscht werden kann. Auch Änderungen in der Geometrie der den Schwingkreis bildenden elektrischen Leitungen können in diesem Fall leicht zu einer Verfälschung des Meßsignals führen.

Aus DE-A-33 35 766 ist eine Meßvorrichtung bekannt, mit der sich die Dicke einer elektrisch leitenden Beschichtung eines Bandes messen läßt. Das Band wird an einer Trommel umgelenkt, in deren Umfangsfläche mehrere Kondensatorplatten in Umfangsrichtung versetzt und auf der Länge der Trommel verteilt angeordnet sind. Die elektrisch leitende Schicht befindet sich auf der von der Trommeloberfläche abgewandten Seite des Bandes, so daß sie jeweils mit einer der Kondensatorplatten einen Kondensator bildet, dessen Dielektrikum durch das Band selbst gebildet wird. An die Kondensatorplatten wird mit Hilfe eines Hochfrequenzgenerators eine Wechselspannung angelegt, und das Meßsignal wird einem in der Trommel untergebrachten Umsetzer zugeführt und von dort beispielsweise drahtlos auf ein stationäres Teil übertragen. Mit Hilfe eines Winkelgebers wird die jeweilige Winkelstellung der Trommel erfaßt, so daß sich das vom Übertrager erhaltene Meßsignal den einzelnen Kondensatorplatten zuordnen läßt und man so das Profil der Schichtdicke auf der gesamten Breite des Bandes erfassen kann.

Die Schichtdicke beeinflußt hier jedoch nicht die Kapazität der Meßkondensatoren. Das Meßprinzip beruht vielmehr darauf, daß die Verstimmung des Meßsignals durch die elektrische Leitfähigkeit der Schicht bestimmt wird, die ihrerseits von der Schichtdicke abhängig ist. Da somit letztlich keine Kapazitäts-, sondern eine Leitfähigkeitsmessung stattfindet, ist die Meßvorrichtung gegenüber äußeren Einflüssen relativ unempfindlich. Für die Messung der Dicke von nichtleitenden Folien ist dieses Meßprinzip jedoch nicht anwendbar.

Aufgabe der Erfindung ist es, einen Sensor der eingangs genannten Art zu schaffen, der eine genauere und von äußeren Störeinflüssen weitgehend unverfälschte Messung der Foliendicke mit hoher räumlicher Auflösung ermöglicht.

Diese Aufgabe wird erfindungsgemäß gelöst durch einen in die Trommel integrierten Oszillator, der ein von der Kapazität des Meßkondensators abhängiges Frequenzsignal erzeugt.

Erfindungsgemäß wird somit durch den Oszillator und den Meßkondensator ein Schwingkreis gebildet, dessen Oszillationsfrequenz von der Kapazität des Meßkondensators und damit von der Dicke der an diesem Meßkondensator anliegenden Folie abhängig ist. Da der Oszillator in die Trommel integriert ist, wird die Geometrie der den Schwingkreis bildenden elektrischen Leitungen durch die Drehung der Trommel nicht verändert, so daß das Meßsignal nicht durch Änderungen der Leitungsgeometrie verfälscht wird. Außerdem können die den Schwingkreis bildenden Leitungen insgesamt sehr kurz gehalten werden, so daß auch die Empfindlichkeit des Schwingkreises gegenüber externen Rauschsignalen und externer Bedämpfung drastisch herabgesetzt wird. Da das Meßsignal ein Frequenzsignal ist, haben auch statische Felder, beispielsweise aufgrund statischer Aufladung, keinen Einfluß auf das Meßsignal. Das Meßsignal kann direkt als Frequenzsignal, ggf. nach Frequenzumsetzung, mit Hilfe des Übertragers weitergeleitet werden. Auch wenn der Übertrager äußeren Störeinflüssen ausgesetzt sein sollte, führt dies in der Regel kaum zu einer Verfälschung der Frequenz des Meßsignals, so daß man letztlich im stationären Teil der Meßanordnung ein weitgehend unverfälschtes Signal erhält. Wahlweise kann das Meßsignal vor der Weiterleitung an den Übertrager auch in ein anderes Signal, beispielsweise ein Spannungs- oder Stromsignal umgewandelt werden.

Auf diese Weise ist es möglich, eine hinreichend empfindliche und genaue Dikkenmessung mit einem Meßkondensator durchzuführen, der verhältnismäßig kleine Abmessungen aufweist. Dementsprechend kann auch die Trommel einen relativ kleinen Umfang haben, so daß eine hohe räumliche Auflösung der Messung erreicht wird. Die zur Erzeugung des kapazitätsabhängigen Frequenzsignals benötigten elektronischen Komponenten lassen sich kleinbauend ausführen, beispielsweise als integrierte Schaltkreise, so daß sie sich trotz der geringen Trommelabmessungen problemlos in der Trommel unterbringen lassen.

Vorteilhafte Ausgestaltungen der Erfindung ergeben sich aus den abhängigen Ansprüchen.

In einer bevorzugten Ausführungsform enthält die Trommel mehrere, beispielsweise vier Meßkondensatoren, so daß sich die räumliche Auflösung entsprechend vervielfacht. Eine einfache und rationelle Fertigung läßt sich dadurch erreichen, daß die Meßkondensatoren durch Leiterbahnen auf einer gemeinsamen Mehrschichtplatine gebildet werden, die rechtwinklig zur Trommelachse orientiert ist. Auch die in die Trommel integrierten elektronischen Komponenten lassen sich dann auf dieser Platine anordnen.

Bei dieser Bauweise erstrecken sich die Kondensatorplatten und die zwischen ihnen gebildeten Spalte in Umfangsrichtung der Trommel. Ihre Länge in Umfangsrichtung der Trommel ist jedoch vorzugsweise kleiner als die Bogenlänge, auf der die Folie am Umfang der Trommel anliegt. Hierdurch ist sichergestellt, daß bei jeder Trommelumdrehung ein hinreichend langer Meßzeitraum besteht, innerhalb dessen die Folie auf der gesamten Länge der Kondensatorplatten satt am Trommelumfang anliegt, so daß Verfälschungen des Meßsignals durch nicht vollständige Anlage der Folie an der Trommel vermieden werden.

Bevorzugt weist die Meßvorrichtung eine Winkelmeßeinrichtung zur Messung der Winkellage der Trommel auf, und die einzelnen Meßkondensatoren werden anhand der gemessenen Winkellage so angesteuert, daß jeweils nur derjenige Meßkondensator aktiv ist, der gerade an der Folie anliegt. Da somit in jedem Augenblick höchstens ein Meß-Schwingkreis aktiv ist, wird vermieden, daß sich die Schwingkreise gegenseitig stören. So wird eine störungsfreie Messung auch dann ermöglicht, wenn eine relativ große Anzahl von Meßkondensatoren auf einem relativ kleinem Trommelumfang untergebracht ist.

Die Winkelmeßeinrichtung bietet auch die Möglichkeit, jeden Meßkondensator zusätzlich während einer kurzen Zeitspanne zu aktivieren, in der er nicht an der Folie anliegt und in der auch keiner der übrigen Meßkondensatoren aktiv ist. Das in dieser Zeitspanne gewonnene Meßsignal kann dann zur Kalibrierung des betreffenden Meßkondensators genutzt werden. Da diese Kalibrierung für jeden Meßkondensator bei jeder Trommelumdrehung neu vorgenommen werden kann, lassen sich Meßfehler, die sich etwa aus der Drift der statischen Kapazität des Meßkondensators oder aus mechanischen oder elektrischen Veränderungen des Sensors ergeben, fortlaufend eliminieren. Als Meßwert wird dann die Differenz zwischen der in der Kalibrierungsphase gemessenen Ruhefrequenz des Meßkondensators und dem während der eigentlichen Meßzeit erhaltenen Spitzenwert der Frequenz ausgewertet. Auch die weiterhin notwendige Temperaturkompensation wird so erheblich vereinfacht. Es genügt, die Temperatur jedes einzelnen Meßkondensators oder die Temperatur der Mehrschichtplatine als ganzes zu messen und die gemessene Frequenzdifferenz mit einem Korrekturfaktor zu multiplizieren, der die temperaturabhängige Empfindlichkeitsänderung repräsentiert, die durch den sich ändernden Plattenabstand hervorgerufen wird. Dieser Korrekturfaktor ist dabei in dem in Frage kommenden Temperaturbereich annähernd linear von der Temperatur abhängig.

Bevorzugt wird das von dem Oszillator erzeugte Frequenzsignal nicht unmittelbar an den Übertrager weitergeleitet, sondern zuvor mit dem Frequenzsignal eines Referenzoszillators gemischt. Das letztlich über den Übertrager weitergeleitete Signal ist dann ein störungsunanfälliges und einfach auswertbares niederfrequentes Schwebungssignal, dessen Frequenz der Differenz zwischen der Frequenz des Referenzoszillators und der Eigenfrequenz des aus Oszillator und Meßkondensator gebildeten Schwingkreises entspricht.

Jedem Meßkondensator ist bevorzugt ein eigener Oszillator zugeordnet, dessen Frequenzsignal nur während der Meßphase auf den Mischer aufgeschaltet wird.

In einer besonders bevorzugten Ausführungsform wird das kapazitätsabhängige Frequenzsignal des Oszillators in die Leitung eingekoppelt, die auch zur Versorgung des Oszillators mit der Betriebs-Gleichspannung dient. Somit läßt sich durch Öffnen eines einzigen Schalters der Oszillator ausschalten und zugleich die Verbindung zwischen dem Oszillator und dem Mischer trennen.

Im folgenden wird ein Ausführungsbeispiel der Erfindung anhand der Zeichnungen näher erläutert.

Es zeigen:
- Fig. 1: einen schematischen Schnitt durch einen wesentlichen Teil des Sensors;
- Fig. 2: ein Schaltbild einer durch einen Oszillator und einen Meßkondensator gebildeten Schaltung;
- Fig. 3: den Sensor nach Fig. 1 in der Draufsicht;
- Fig. 4: Signalwellenformen für eine Kalibrierungsmessung; und
- Fig. 5: Signalwellenformen entsprechend Fig. 4, für eine Dickenmessung.

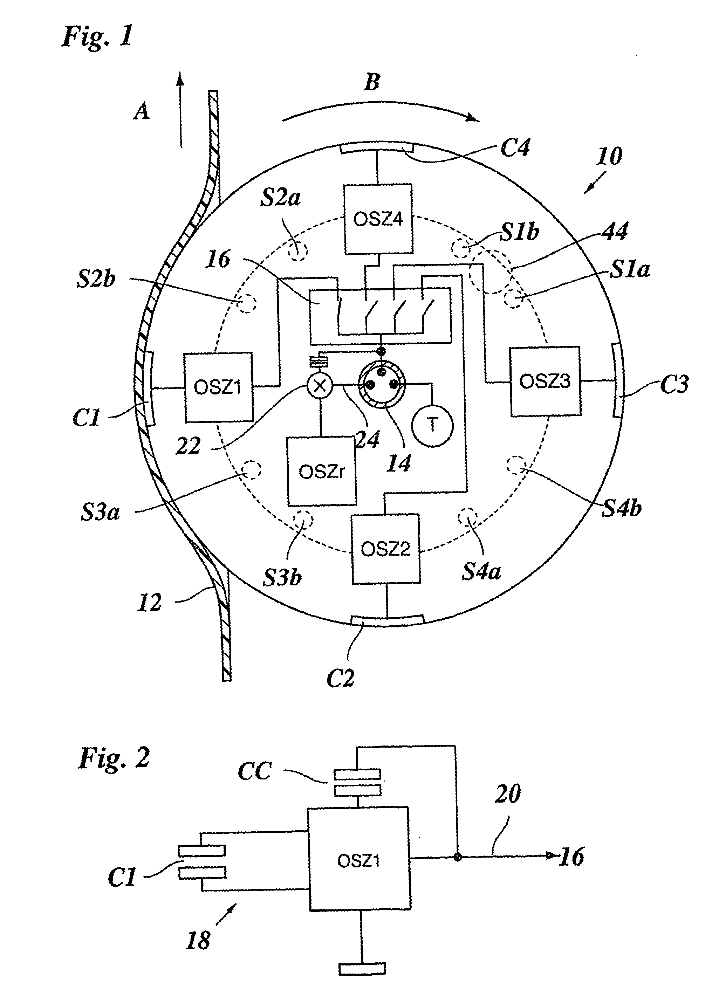

In Fig. 1 ist in einem schematischen Querschnitt eine Trommel 10 eines Sensors gezeigt, der zur kapazitiven Messung der Dicke einer Folie 12 dient. Die im Schnitt dargestellte Folie 12 ist Teil eines Folienschlauches, der in einer Blasfolienanlage extrudiert und in Richtung des Pfeils A nach oben abgezogen wird. Die Trommel 10 ist auf einer drehbaren Welle 14 befestigt, die so gehalten wird, daß der Umfang der Trommel den Folienschlauch etwas eindrückt und die Trommel in Richtung des Pfeils B an der Folie abrollt. Da im Inneren des Folienschlauches durch die Blasluft ein leichter Überdruck erzeugt wird, schmiegt sich die Folie 12 auf einer bestimmten Bogenlänge an den Umfang der Trommel 10 an.

An der Umfangsfläche der Trommel 10 sind vier Meßkondensatoren C1- C4 angeordnet, deren Kondensatorplatten parallel zur Zeichenebene in Fig. 1 orientiert sind, so daß von jedem Meßkondensator nur eine der Kondensatorplatten sichtbar ist. Die äußeren Ränder der Kondensatorplatten liegen unmittelbar in der Umfangsfläche der Trommel 10. Wenn an den Meßkondensator eine Spannung angelegt wird, so bildet sich ein elektrisches Feld nicht nur unmittelbar zwischen den Kondensatorplatten, sondern auch am Rand der Kondensatorplatten außerhalb des Kondensators aus. Bei dem Meßkondensator C1, der in Fig. 1 an der Folie 12 anliegt, durchsetzt dieses Randfeld die Folie 12 auf ihrer gesamten Dicke, so daß die Kapazität dieses Meßkondensators durch die Dielektrizitätskonstante des Folienmaterials beeinflußt wird und somit von der Dicke der Folie 12 abhängig ist.

Jeder Meßkondensator ist elektrisch mit einem zugehörigen Oszillator OSZ1 - OSZ4 verbunden, der durch einen Multiplexer 16 selektiv mit einer über die Welle 14 zugeführten Betriebsspannung (beispielsweise einer Gleichspannung) versorgt wird.

Wie in Fig. 2 am Beispiel des Meßkondensators C1 und des zugehörigen Oszillators OSZ1 gezeigt ist, bilden die Meßkondensatoren jeweils mit dem betreffenden Oszillator einen Schwingkreis 18. Dieser Schwingkreis 18 wird mit Hilfe des Oszillators zu einer Schwingung mit seiner Eigenfrequenz angeregt, die von der Kapazität des Meßkondensators und somit von der Dicke der Folie 12 abhängig ist. Die Oszillation des Schwingkreises 18 wird beispielsweise mit Hilfe eines Kopplungskondensator CC potentialfrei aus dem Schwingkreis ausgekoppelt und auf eine Leitung 20 geschaltet, die den Oszillator OSZ1 mit dem Multiplexer 16 verbindet und auch zur Betriebsspannungsversorgung des Oszillators dient.

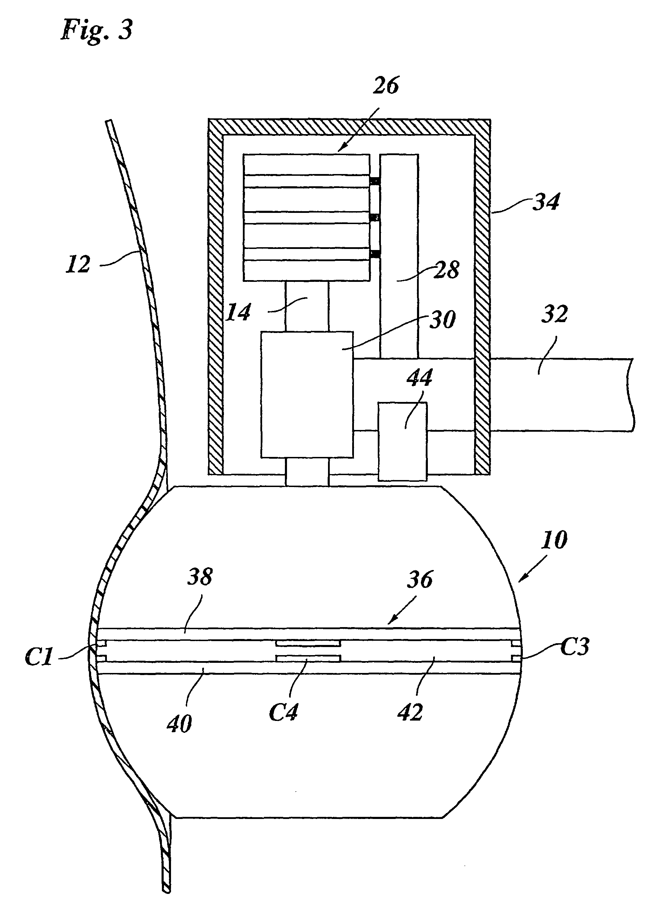

Fig. 1 zeigt den Multiplexer 16 in dem Zustand, in dem der Oszillator OSZ1 eingeschaltet ist, während die drei übrigen Oszillatoren ausgeschaltet sind. Das vom Oszillator OSZ1 erzeugte Frequenzsignal, das mit Hilfe des Kopplungskondensators CC ausgekoppelt wurde, gelangt dann über einen weiteren Kopplungskondensator an einen Mischer 22 und wird dort mit einem Referenzsignal gemischt, das von einem Referenzoszillator OSZr erzeugt wird und eine feste Frequenz hat. Der Mischer 22 wird beispielsweise durch einen Analogmultiplizierer mit Tiefpassfunktion gebildet und liefert an seinem Ausgang ein Frequenzsignal 24, dessen Frequenz gleich der Differenz zwischen der Frequenz des Referenzoszillators OSZr und der Eigenfrequenz des Schwingkreises 18 ist. Dieses Frequenzsignal 24 wird über die Welle 14 einem in Fig. 3 gezeigten Übertrager 26 zugeführt und so zur weiteren Auswertung auf stationäres Teil 28 übertragen.

Der Übertrager 26 wird durch eine Schleifringtrommel gebildet, die auf der Welle 14 sitzt, auf der auch die Trommel 10 gehalten ist. Ein Abschnitt der Welle 14 zwischen dem Übertrager 26 und der Trommel 10 ist mit Hilfe eines Lagers 30 drehbar am Ende eines Armes 32 gehalten, der auch das stationäre Teil 28 trägt und mit dem der durch die Trommel 10 und den Übertrager 26 gebildete Sensor gegen die Folie 12 angedrückt wird. Der Übertrager 26 und das zugehörige stationäre Teil 28 sind im gezeigten Beispiel von einem schützenden Gehäuse 34 umgeben.

Wie weiter in Fig. 3 zu erkennen ist, hat die Trommel 10 eine ballige Umfangsfläche, so daß sie die Folie 12 nicht beschädigt. In der Mittelebene der Trommel 10, also an der dicksten Stelle, ist eine Mehrschichtplatine 36 angeordnet, auf der die in Fig. 1 gezeigten elektronischen Komponenten montiert sind und die zugleich die Meßkondensatoren C1 - C4 bildet. Die Kondensatorplatten der Meßkondensatoren werden durch Leiterbahnen auf den einander zugewandten Seiten mindestens zweier Platinen 38, 40 gebildet, die zusammen mit einer isolierenden Zwischenschicht 42 (oder mehren Zwischenschichten) die Mehrschichtplatine 36 bilden.

Da sich die Trommel 10 erwärmt, wenn sie an dem heißen Folienschlauch abrollt, unterliegt die Zwischenschicht 42 einer thermischen Ausdehnung, die zu einer Änderung des Plattenabstands der Meßkondensatoren C1 - C4 führt. Diese Änderung des Plattenabstands verfälscht die als Meßsignale gewonnenen Frequenzsignale 24, so daß bei der Umrechnung der Frequenzen dieser Frequenzsignale in die Dicke der Folie 12 eine entsprechende Korrektur vorgenommen werden muß. Zu diesem Zweck enthält die Trommel einen Temperaturfühler T (Fig. 1) dessen Temperatursignal ebenfalls über den Übertrager 26 übertragen wird. Ein dritter Schleifring des Übertragers 26 dient zur Zufuhr der Betriebsspannung zu den in der Trommel 10 untergebrachten elektronischen Komponenten.

Zu dem Sensor gehört weiterhin noch eine Winkelmeßeinrichtung, mit der die Winkelposition der Trommel 10 relativ zu dem stationären Teil 28 und dem Arm 32 gemessen wird, so daß die Oszillatoren OSZ1 - OSZ4 mit Hilfe des Multiplexers 16 winkelabhängig ein- und ausgeschaltet werden können. Im gezeigten Beispiel wird die Winkelmeßeinrichtung durch einen an dem Arm 32 gehaltenen Magnetkopf 44 gebildet, der der Stirnfläche der Trommel 10 zugewandt ist und mit vier Paaren von in der Trommel 10 angeordneten Magnetschaltern S1a, S1b; S2a, S2b; S3a, S3b und S4a, S4b zusammenwirkt.

Die Magnetschalter sind über nicht gezeigte Leitungen mit dem Multiplexer 16 verbunden und steuern dessen Funktion. In dem in Fig. 1 gezeigten Zustand hat der Magnetschalter S1a gerade den Magnetkopf 44 passiert. Dabei wurde der Oszillator OSZ1 eingeschaltet. Wenn der Magnetschalter S1b den Magnetkopf 44 passiert, wird der Oszillator OSZ1 wieder ausgeschaltet. Wie in Fig. 1 zu erkennen ist, ist die Länge des Meßkondensators C1 in Umfangsrichtung deutlich kleiner als die Bogenlänge, auf der die Folie 12 an der Trommel 10 anliegt. Hierdurch und durch die Festlegung der Ein- und Ausschaltzeitpunkte mit Hilfe der Magnetschalter S1a und S1b wird sichergestellt, daß die Dickenmessung mit Hilfe des Meßkondensators C1 nur dann erfolgt, wenn die Folie 12 satt auf der gesamten Länge des Plattenspaltes am Meßkondensator anliegt. Etwaige Schwankungen der Eintauchtiefe der Trommel 10 in den Folienschlauch wirken sich somit nicht auf das Meßergebnis aus.

Wenn der Magnetschalter S1b den Magnetkopf 44 passiert, wird unmittelbar nachdem der Oszillator OSZ1 ausgeschaltet wurde, der nächste Oszillator OSZ2 für ein kurzes Zeitintervall eingeschaltet. Während dieses Zeitintervalls ist der Meßkondensator C2 noch weit von der Folie 12 entfernt, so daß seine Kapazität nicht durch die Folie beeinflußt wird. Während dieses Zeitintervalls kann somit eine Ruhefrequenz gemessen werden, die die ursprüngliche, nicht durch die Folie beeinflußte Kapazität des Meßkondensators C2 repräsentiert. Diese Ruhefrequenz wird gespeichert und später, wenn der Meßkondensator C2 mit der Folie in Berührung kommt, zum Kalibrieren des Meßergebnisses benutzt. Die Ein-Ausschalt- und Kalibrierungsperioden der übrigen Oszillatoren werden in entsprechender Weise durch die jeweils zugehörigen Magnetschalter gesteuert. Auf diese Weise ist sichergestellt, daß während jeder vollständigen Umdrehung der Trommel 10 vier Dickenmessungen und vier vorbereitende Kalibrierungsmessungen durchgeführt werden, ohne daß sich die Betriebszeiten der einzelnen Oszillatoren überlappen. Damit läßt sich einerseits die Dicke der nach oben abgezogenen Folie 12 in kurzen Zeitabständen und somit mit hoher räumlicher Auflösung messen, während andererseits das Meßergebnis nicht durch Störsignale von den übrigen, nicht an der Messung beteiligten Oszillatoren beeinflußt wird.

Es versteht sich, daß der oben beschriebene Winkelgeber auch auf andere Weise realisiert werden kann, beispielsweise durch an der Schleifringtrommel des Übertragers ausgebildete Kontakte.

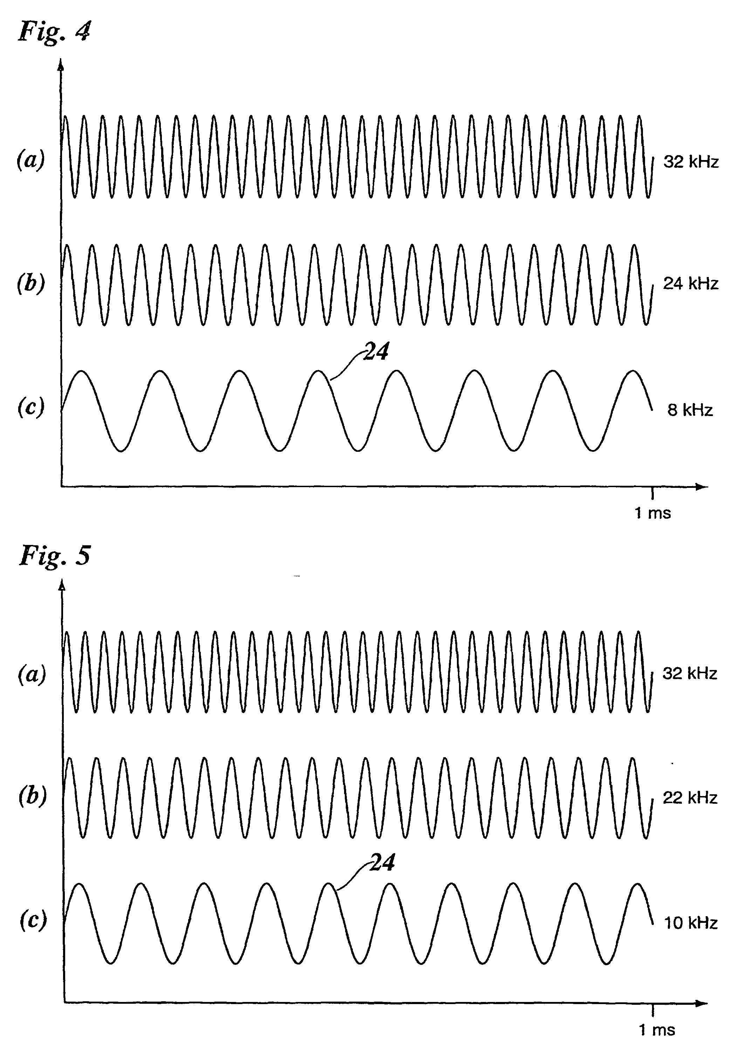

In Fig. 4 zeigt die Kurve (a) das Signal des Referenzoszillators OSZr, der im hier angenommenen Beispiel eine feste Frequenz von 32 kHz hat. Die Kurve (b) zeigt das während einer Kalibrierungsmessung, also in Abwesenheit der Folie, im Schwingkreis 18 auftretende Signal, das hier beispielsweise eine Frequenz von 24 kHz hat. Die Kurve (c) zeigt das Frequenzsignal 24, das durch Mischen der den Kurven (a) und (b) entsprechenden Signale am Ausgang des Mischers 22 erhalten wird. Dieses Frequenzsignal 24 hat eine Frequenz von 8 kHz, entsprechend der Differenz zwischen 32 kHz und 24 kHz. Bei der Multiplikation der Signale gemäß den Kurven (a) und (b) entsteht noch eine Frequenzkomponente mit der Summenfrequenz von 56 kHz, doch wird diese Frequenzkomponente durch die Tiefpassfunktion des Mischers 22 eliminiert.

Fig. 5 zeigt die entsprechenden Kurven während einer Dickenmessung. Da in diesem Fall die Folie 12 als Dielektrikum wirkt, hat der Meßkondensator eine höhere Kapazität, so daß die Eigenfrequenz des Schwingkreises 18 je nach Dikke der Folie mehr oder minder stark abnimmt, beispielsweise auf 22 kHz. Bei der Dickenmessung erhöht sich somit die Frequenz des Frequenzsignals 24 von 8 kHz auf 10 kHz. Die Differenz 10 kHz - 8 kHz = 2 kHz (genauer: das Maximum dieser Differenz während der Meßperiode) bildet des Rohmeßsignal, aus dem nach Temperaturkorrektur die Foliendicke berechnet werden kann. Die hier angenommenen Zahlenwerte der Frequenzen sind nicht realistisch und dienen lediglich zur Illustration des Prinzips.

## Patentansprüche

1. Sensor zur kapazitiven Messung von Foliendicken, mit einer an der Folie (12) abrollenden Trommel (10), die mindestens einen Meßkondensator (C1 - C4) aufweist, dessen Platten so in der Umfangsfläche der Trommel (10) angeordnet sind, daß seine Kapazität von der Foliendicke beeinflußt wird, und mit einem Übertrager (26) zur Übertragung des Meßsignals von der rotierenden Trommel (10) auf ein stationäres Teil (28), **gekennzeichnet durch** einen in die Trommel (10) integrierten Oszillator (OSZ1 - OSZ4), der ein Signal (24) erzeugt, dessen Frequenz von der Kapazität des Meßkondensators (C1 - C4) abhängig ist.

2. Sensor nach Anspruch 1, **gekennzeichnet, durch** eine Schaltung (16), die den Meßkondensator (C1 - C4) in einer Zeitspanne, in der er nicht an der Folie (12) anliegt, für eine Kalibrierungsmessung aktiviert.

3. Sensor nach Anspruch 1 oder 2, **dadurch gekennzeichnet, daß** die Trommel mehrere in Umfangsrichtung verteilte Meßkondensatoren (C 1 - C4) aufweist und das jedem Meßkondensator ein eigener Oszillator (OSZ1 - OSZ4) derart zugeordnet ist, daß die Geometrie des durch den Meßkondensator und den Oszillator gebildeten Schwingkreises (18) für alle Meßkondensatoren dieselbe ist.

4. Sensor nach Anspruch 1, 2 oder 3, **dadurch gekennzeichnet, daß** die Trommel (10) mehrere auf ihrem Umfang verteilte Meßkondensatoren (C1 - C4) sowie eine Schaltung (16) aufweist, die die Meßkondensatoren in Abhängigkeit von der Winkellage der Trommel (10) derart aktiviert und deaktiviert, daß zu jedem Zeitpunkt höchstens einer der Meßkondensatoren aktiv ist.

5. Sensor nach einem der vorstehenden Ansprüche, **dadurch gekennzeichnet, daß** die Betriebsspannungsversorgung des Oszillators (OSZ1 - OSZ4) und die Ausgabe des Frequenzsignals vom Oszillator auf einer gemeinsamen Leitung (20) erfolgen.

6. Sensor nach den Ansprüchen 4 und 5, **dadurch gekennzeichnet, daß** die Schaltung, die das Aktivieren und Deaktivieren der Meßkondensatoren (C1 - C4) steuert, ein Multiplexer (16) ist, der die Leitungen (20) der einzelnen Oszillatoren (OSZ1 - OSZ4) nacheinander auf den Übertrager (26) schaltet.

7. Sensor nach einem der vorstehenden Ansprüche, **gekennzeichnet durch** einen Referenzoszillator (OSZr) mit einer festen Referenzfrequenz und einen Mischer (22), der **durch** Mischen der Referenzfrequenz mit dem Signal des Oszillators (OSZ1 - OSZ4) ein an den Übertrager weitergeleitetes Frequenzsignal (24) erzeugt.

8. Sensor nach den Ansprüchen 6 und 7, **dadurch gekennzeichnet, daß** ein einziger Referenzoszillator (OSZr) und ein einziger Mischer (22) durch den Multiplexer (16) selektiv mit den Oszillatoren (OSZ1 - OSZ4) verbunden werden.

9. Sensor nach einem der vorstehenden Ansprüche, **dadurch gekennzeichnet, daß** die Trommel (10) so montiert ist, daß sich die Folie (12) auf einer bestimmten Bogenlänge an den Umfang der Trommel (10) anschmiegt, und daß der Meßkondensator (C1 - C4) so dimensioniert ist, daß seine Länge in Umfangsrichtung der Trommel deutlich kleiner ist als die genannte Bogenlänge.

10. Sensor nach einem der vorstehenden Ansprüche, **dadurch gekennzeichnet, daß** Meßkondensatoren (C1 - C4) am äußeren Umfangsrand einer Mehrschichtplatine (36) ausgebildet sind, die rechtwinklig zur Achse der Trommel (10) orientiert ist.

## Claims

1. A sensor for the capacitive measurement of film thicknesses, comprising a drum (10) that rolls on the film (12) and has at least one measuring capacitor (C1 - C4) the plates of which are so arranged in the circumferential surface of the drum (10) that its capacitance is affected by the thickness of the film, and comprising a transfer element (26) for transferring the measuring signal from the rotating drum (10) to a stationary part (28), **characterised by** an oscillator (OSZ1 - OSZ4) which is integrated in the drum (10) and which generates a signal (24) the frequency of which is dependent on the capacitance of the measuring capacitor (C1 - C4).

2. A sensor according to claim 1, **characterised by** a circuit (16) that, for calibration measurement, activates the measuring capacitor (C1 - C4) in a time period in which it is not lying against the film (12).

3. A sensor according to claim 1 or 2, **characterised in that** the drum has a plurality of measuring capacitors (C1 - C4) distributed in the circumferential direction and every measuring capacitor is associated with its own oscillator (OSZ1 - OSZ4) in such a manner that the geometry of the oscillating circuit (18) formed by the measuring capacitor and the oscillator is the same for all the measuring capacitors.

4. A sensor according to claim 1, 2 or 3, **characterised in that** the drum (10) has a plurality of measuring capacitors (C1 - C4) distributed over its circumference and a circuit (16) that activates and deactivates the measuring capacitors in dependence upon the angular position of the drum (10) in such a manner that not more than one of the measuring capacitors is active at any one time.

5. A sensor according to any one of the preceding claims, **characterised in that** the supply of operating voltage to the oscillator (OSZ1 - OSZ4) and the outputting of the frequency signal from the oscillator are effected on a common line (20).

6. A sensor according to claims 4 and 5, **characterised in that** the circuit that controls the activation and deactivation of the measuring capacitors (C1 - C4) is a multiplexer (16) that successively switches the lines (20) of the individual oscillators (OSZ1 - OSZ4) to the transfer element (26).

7. A sensor according to any one of the preceding claims, **characterised by** a reference oscillator (OSZr) having a fixed reference frequency, and a mixer (22) which, by mixing the reference frequency with the signal of the oscillator (OSZ1 - OSZ4), generates a frequency signal (24) which is passed to the transfer element.

8. A sensor according to claims 6 and 7, **characterised in that** a single reference oscillator (OSZr) and a single mixer (22) are selectively connected to the oscillators (OSZ1 - OSZ4) by the multiplexer (16).

9. A sensor according to any one of the preceding claims, **characterised in that** the drum (10) is mounted in such a manner that the film (12) rests in contact with the circumference of the drum (10) over a certain curve length, and the measuring capacitor (C1 - C4) is dimensioned in such a manner that its length in the circumferential direction of the drum is distinctly smaller than the said curve length.

10. A sensor according to any one of the preceding claims, **characterised in that** measuring capacitors (C1 - C4) are constructed on the outer circumferential edge of a multi-layer board (36) which is oriented at right angles to the axis of the drum (10).

## Revendications

1. Palpeur pour la mesure capacitive d'épaisseurs de feuilles, avec un tambour (10) roulant sur la feuille (12), lequel comporte au moins un condensateur de mesure (C1-C4) dont les plaques sont disposées dans la surface périphérique du tambour (10) de manière que sa capacité soit influencée par l'épaisseur de la feuille, et avec un transmetteur (26) pour la transmission du signal de mesure du tambour tournant (10) à une partie fixe (28), **caractérisé par** un oscillateur (OSZ1-OSZ4) intégré au tambour (10), qui produit un signal (24) dont la fréquence dépend de la capacité du condensateur de mesure (C1-C4).

2. Palpeur selon la revendication 1, **caractérisé par** un circuit (16) qui active le condensateur de mesure (C1-C4) dans un intervalle de temps pendant lequel il ne s'applique pas contre la feuille (12).

3. Palpeur selon la revendication 1 ou 2, **caractérisé en ce que** le tambour comporte plusieurs condensateurs de mesure (C1-C4) répartis dans la direction périphérique et **en ce qu'**à chaque condensateur de mesure est associé son propre oscillateur (OSZ1-OSZ4) de manière que la géométrie du circuit oscillant (18) formé par le condensateur de mesure et l'oscillateur soit la même pour tous les condensateurs de mesure.

4. Palpeur selon la revendication 1, 2 ou 3, **caractérisé en ce que** le tambour (10) comporte plusieurs condensateurs de mesure (C1-C4) répartis sur son pourtour ainsi qu'un circuit (16) qui active et désactive les condensateurs de mesure en fonction de la position angulaire du tambour (10), de manière qu'à chaque instant au maximum l'un des condensateurs de mesure soit actif.

5. Palpeur selon l'une des revendications précédentes, **caractérisé en ce que** l'alimentation en tension de service de l'oscillateur (OSZ1-OSZ4) et l'émission du signal de fréquence par l'oscillateur s'effectuent sur une ligne commune (20).

6. Palpeur selon les revendications 4 et 5, **caractérisé en ce que** le circuit, qui commande l'activation et la désactivation des condensateurs de mesure (C1-C4), est un multiplexeur (16) qui relie successivement les lignes (20) des différents oscillateurs (OSZ1-OSZ4) au transmetteur (26) .

7. Palpeur selon l'une des revendications précédentes, **caractérisé par** un oscillateur de référence (OSZr) avec une fréquence de référence fixe et un mixeur (22) qui, par mixage de la fréquence de référence et du signal de l'oscillateur (OSZ1-OSZ4), produit un signal de fréquence (24) transmis au transmetteur.

8. Palpeur selon les revendications 6 et 7, **caractérisé en ce qu'**un seul oscillateur de référence (OSZr) et un seul mixeur (22) sont reliés de manière sélective par le multiplexeur (16) aux oscillateurs (OSZ1-OSZ4).

9. Palpeur selon l'une des revendications précédentes, **caractérisé en ce que** le tambour (10) est monté de manière que la feuille (12) épouse le pourtour du tambour (10) sur une longueur d'arc déterminée, et **en ce que** le condensateur de mesure (C1-C4) est dimensionné de manière que sa longueur dans la direction périphérique du tambour soit nettement inférieure à ladite longueur d'arc.

10. Palpeur selon l'une des revendications précédentes, **caractérisé en ce que** des condensateurs de mesure (C1-C4) sont réalisés sur le bord périphérique extérieur d'une platine multicouche (36) qui est orientée perpendiculairement à l'axe du tambour (10).
